# EUROPÄISCHE PATENTANMELDUNG

(11) **EP 3 715 966 A1**
(43) Veröffentlichungstag der Anmeldung: **30.09.2020**
(21) Anmeldenummer: 19000157.8
(22) Anmeldetag: 29.03.2019
(51) Int. Cl.: G05B 19/042, G06F 11/20, H04L 29/08

(54) **VERFAHREN UND SYSTEM ZUR EINBETTUNG EINER EINZUBETTENDEN WEB-ANWENDUNG IN EINE UMGEBENDE WEB-ANWENDUNG**

(71) Anmelder: Siemens Aktiengesellschaft, 80333 München (DE)
(72) Erfinder: Lutz, Benjamin, 76327 Pfinztal (DE)

(57) **Zusammenfassung**

Bei einem Verfahren und System (100) zur Einbettung einer Web-Anwendung (24) in eine umgebende Web-Anwendung (23), wobei die einzubettende Web-Anwendung (24) zum Ablauf in einem separaten Ausführungs- und Anzeigenbereich (25) der umgebenden Web-Anwendung (24) vorgesehen ist, wird die einzubettende Web-Anwendung (24) erfindungsgemäß durch zumindest zwei Web-Server (5', 6') bereitgestellt.

Dies kann insbesondere bei großen industriellen Automatisierungssystemen wie z.B. Prozessleitsystemen genutzt werden, um Redundanz, Überwachbarkeit und Bedienbarkeit und somit Ausfallsicherheit erhöhen, Komplexität zu reduzieren, Kommunikationsverkehr zu reduzieren, und bessere Möglichkeiten für Zugriffsbeschränkungen für Personal zu erhalten.

## Beschreibung

Die Erfindung betrifft ein Verfahren und ein System zur Einbettung einer einzubettenden Web-Anwendung in eine umgebende Web-Anwendung gemäß Patentanspruch 1 bzw. 9. Die Erfindung betrifft ferner ein industrielles Automatisierungssystem mit einem derartigen System gemäß Patentanspruch 15.

Industrielle Automatisierungssysteme dienen zur Überwachung, Steuerung und Regelung von technischen Prozessen, insbesondere im Bereich Fertigungs-, Prozeß- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Aus der EP 2902 857 B1 ist es bereits bekannt, Funktionen eines industriellen Automatisierungssystems durch Web-Anwendungen verfügbar zu machen, die Client-seitig während eines Steuerungsprogrammablaufs bzw. zur Laufzeit (Runtime) zu miteinander verknüpften Web-Anwendungen zusammengefaßt und an einer Client-seitigen Benutzerschnittstelle bereitgestellt werden. Die Web-Anwendungen umfassen jeweils zumindest eine Anwendungskomponente, für die jeweils zumindest eine Komponenteninstanz erzeugt wird. Vorzugsweise umfaßt die Clientseitige Benutzerschnittstelle einen Web-Browser.

Aus der EP 3 151 503 A1 sind ein Verfahren und ein System zur Einbettung einer einzubettenden Web-Anwendung in eine umgebende Web-Anwendung bekannt, wobei die umgebende erste Web-Anwendung in einem Browser ausgeführt wird und die einzubettende zweite Web-Anwendung zum Ablauf in einem separaten Ausführungs- und Anzeigebereich der umgebenden ersten Web-Anwendung vorgesehen ist, wobei die umgebende erste Web-Anwendung durch einen ersten Web-Server bereitgestellt wird, und die einzubettende zweite Web-Anwendung durch einen zweiten Web-Server bereitgestellt wird.

Bei verteilten Diensten, deren Dienstkomponenten durch mehrere unterschiedliche Steuerungs- bzw. Rechnereinheiten zur Realisierung von Funktionen eines Automatisierungssystems bereitgestellt werden, bestehen hohe Anforderungen an eine Kommunikationsinfrastruktur des Automatisierungssystems. Zum einen sind üblicherweise Anforderungen nach einer echtzeitfähigen Kommunikation zu erfüllen, andererseits sollen unterschiedliche Kommunikationsprotokolle für verteilte Dienste möglichst transparent nutzbar sein. Eine leistungsschwache Kommunikationsinfrastruktur kann eine fehlerfreie Bereitstellung eines Dienstes gefährden und sich nachteilig auf Systemstabilität und -verfügbarkeit auswirken.

Bei Zugriffen auf Diensten zugeordneter Daten und Messwerte innerhalb eines industriellen Automatisierungssystems bestehen darüber hinaus oft hohe Anforderungen hinsichtlich Verfügbarkeit und Quality of Service.

Außerdem bestehen aus Gründen der Betriebssicherheit, der Komplexitätsreduzierung und des Know-How-Schutzes oftmals auch Einschränkungen bei den Rechten von eigenem Personal oder Fremdpersonen, auf Dienste, Daten oder Messwerte des Automatisierungssystems bzw. einer von diesem automatisierten Anlage oder Einrichtung zuzugreifen.

Diese Anforderungen werden in der Regel umso bedeutender, je größer das Automatisierungssystem bzw. eine von diesem automatisierte Anlage oder Einrichtung ist. Sie gelten deshalb insbesondere für große und komplexe Prozessleitsysteme, wie sie zur Überwachung, Steuerung und Regelung von Anlagen der Prozessindustrie (z.B. Chemie, Pharma, Metall, Öl- und Gas, Papier) zum Einsatz kommen.

Es ist deshalb Aufgabe vorliegender Erfindung, ein Verfahren und ein System anzugeben, mit denen diese Anforderungen, insbesondere bei großen industriellen Prozessleitsystemen, noch besser als bisher erfüllt werden können.

Die Lösung dieser Aufgabe gelingt durch ein Verfahren gemäß Patentanspruch 1 und ein System gemäß Patentanspruch 9. Ein industrielles Automatisierungssystem, insbesondere ein Prozessleitsystem, mit einem derartigen System ist Gegenstand des Patentanspruchs 15. Vorteilhafte Ausgestaltungen sind jeweils Gegenstand der Unteransprüche.

Bei dem erfindungsgemäßen Verfahren zur Einbettung einer einzubettenden Web-Anwendung in eine umgebende Web-Anwendung, wobei die einzubettende Web-Anwendung zum Ablauf in einem separaten Ausführungs- und Anzeigenbereich der umgebenden Web-Anwendung vorgesehen ist, wird die einzubettende Web-Anwendung durch zumindest zwei Web-Server bereitgestellt. Vorzugsweise wird die umgebende Web-Anwendung dabei in einem Browser ausgeführt.

Durch die Bereitstellung der gleichen einzubettenden Web-Anwendung durch zumindest zwei Web-Server kann bei einem Ausfall eines der zwei Web-Server die Web-Anwendung und die dadurch bereitgestellte Funktion weiterhin zur Verfügung gestellt werden. Gerade bei großen komplexen Systemen mit einer Vielzahl von Diensten bzw. Funktionen, Datenquellen und einer Vielzahl von Personen, die überwachend oder steuernd auf die Dienste bzw. Funktionen zugreifen, bietet sich hierdurch aber auch noch zusätzliche Flexibilität bei der Aufteilung der Dienste bzw. Funktionen, Datenquellen, Datenerfassungen und Datenspeicherungen auf unterschiedliche Teilsysteme und diesen jeweils zugeordnete Server. Dies kann genutzt werden, um Redundanz, Überwachbarkeit und Bedienbarkeit und somit Ausfallsicherheit zu erhöhen, Komplexität zu reduzieren, Kommunikationsverkehr zu reduzieren, und bessere Möglichkeiten für Zugriffsbeschränkungen für Personal zu erhalten.

Von Vorteil ist dabei zumindest ein Kriterium definiert, anhand dessen, vorzugsweise automatisiert, derjenige der zumindest zwei Web-Server bestimmt wird, dessen bereitgestellte einzubettende Web-Anwendung in die umgebende Web-Anwendung eingebettet wird. Das Kriterium kann dabei beispielsweise auch implizit anhand in dem Web-Server abgespeicherter Zuordnungen von Web-Anwendungen zu Web-Servern hinterlegt sein (z.B. im Rahmen einer Projektierung des Server-Systems).

Wenn die einzubettende bzw. eingebettete Web-Anwendung und die zumindest zwei Web-Server über eine Kommunikationseinrichtung kommunikativ miteinander verbunden sind, bezieht sich das Kriterium vorzugsweise auf die Kommunikation in der Kommunikationseinrichtung. Von besonderem Vorteil ist es dabei, wenn das Kriterium eine Reduzierung eines Datenverkehrs in der Kommunikationseinrichtung, insbesondere zwischen den zumindest zwei Web-Servern, ist.

Das Kriterium kann sich aber auch auf Zugriffsbeschränkungen, Quality of Service, Verfügbarkeit des Web-Servers, etc. beziehen. Es kann dabei auch eine Kombination von Kriterien zum Einsatz kommen

Gemäß einer weiteren vorteilhaften Ausgestaltung ermittelt ein Web-Server, der die umgebende Web-Anwendung bereitstellt, anhand des Kriteriums denjenigen der zumindest zwei Web-Server, dessen bereitgestellte einzubettende Web-Anwendung in die umgebende Web-Anwendung eingebettet wird.

Der Web-Server, der die umgebende Web-Anwendung bereitstellt, kann dann den ermittelten Web-Server der umgebenden Web-Anwendung bei deren Ausführung mitteilen, so dass diese dann die Web-Anwendung dieses ermittelten Web-Servers in die umgebende Web-Anwendung einbettet.

Der Web-Server, der die umgebende Web-Anwendung bereitstellt, kann der umgebenden Web-Anwendung bei deren Ausführung zusätzlich auch den oder die anderen Web-Server mitteilen, der bzw. die die einzubettende Web-Anwendung bereitstellt bzw. bereitstellen. Bei einem Ausfall der eingebetteten Web-Anwendung kann dann ohne größere Verzögerung auf einen anderen Web-Server umgeschaltet und die Web-Anwendung dieses Web-Servers eingebunden werden.

Alternativ kann von einem Web-Server, der die umgebende Web-Anwendung bereitstellt, auch nur das zumindest eine Kriterium für die Bestimmung des Web-Servers für die einzubettende Anwendung bereitgestellt werden und dann an anderer Stelle für die Bestimmung des Web-Servers der einzubettenden Web-Applikation genutzt werden. Beispielsweise können die umgebende Anwendung oder ein anderer Dienst dann selbst anhand des zumindest einen Kriteriums den Web-Server bestimmen.

Von Vorteil kommt das Verfahren in einem industriellen Automatisierungssystem, insbesondere einem Prozessleitsystem, zum Einsatz, d.h. dass durch die Web-Anwendungen Funktionen in einem industriellen Automatisierungssystem bereitgestellt werden.

Ein erfindungsgemäßes System zur Einbettung einer einzubettenden Web-Anwendung in eine umgebende Web-Anwendung, wobei die einzubettende Web-Anwendung zum Ablauf in einem separaten Ausführungs- und Anzeigenbereich der umgebenden Web-Anwendung vorgesehen ist, umfasst zumindest zwei Web-Server, die die einzubettende Web-Anwendung bereitstellen (d.h die gleiche Web-Anwendung bereitstellen). Vorzugsweise umfasst das System einen Browser, der zur Ausführung der umgebenden Web-Anwendung ausgebildet ist.

Gemäß einer vorteilhaften Ausgestaltung ist das System ausgebildet, anhand zumindest eines Kriteriums denjenigen der zumindest zwei Web-Server zu bestimmen, dessen bereitgestellte einzubettende Web-Anwendung in die umgebende Web-Anwendung einzubetten ist.

Gemäß einer vorteilhaften Ausgestaltung sind die Web-Anwendung und die zumindest zwei Web-Server über eine Kommunikationseinrichtung kommunikativ miteinander verbunden und das Kriterium bezieht sich auf die Kommunikation in der Kommunikationseinrichtung.

Von besonderem Vorteil ist das Kriterium eine Reduzierung eines Datenverkehrs in der Kommunikationseinrichtung, insbesondere zwischen den zumindest zwei Web-Servern.

Ein Web-Server, der die umgebende Web-Anwendung bereitstellt, ist vorzugsweise ausgebildet, anhand des Kriteriums denjenigen der zwei Web-Server zur ermitteln, dessen bereitgestellte einzubettende Web-Anwendung in die umgebende Web-Anwendung einzubetten ist.

Der Web-Server, der die umgebende Web-Anwendung bereitstellt, ist dann von Vorteil auch dazu ausgebildet, den ermittelten Web-Server der umgebenden Web-Anwendung bei deren Ausführung mitzuteilen.

Der Web-Server, der die umgebende Web-Anwendung bereitstellt, kann auch ausgebildet sein, der umgebenden Web-Anwendung bei deren Ausführung zusätzlich auch die anderen Web-Server mitzuteilen, die die einzubettende Web-Anwendung bereitstellen.

Alternativ kann das Kriterium von einem Web-Server, der die umgebende Web-Anwendung bereitstellt, auch nur bereitgestellt werden und an anderer Stelle für die Bestimmung des Web-Servers der einzubettenden Web-Applikation genutzt werden.

Die für das erfindungsgemäße verfahren und seine vorteilhaften Ausgestaltungen genannten Vorteile gelten entsprechend für das erfindungsgemäße System und seine vorteilhaften Ausgestaltungen.

Ein erfindungsgemäßes industrielles Automatisierungssystem umfasst ein vorstehend beschriebenes System.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Es zeigen:
FIG 1: in vereinfachter Darstellung einen prinzipiellen Aufbau eines erfindungsgemäßen Systems, und
FIG 2: einen erfindungsgemäßen Verfahrensablauf.

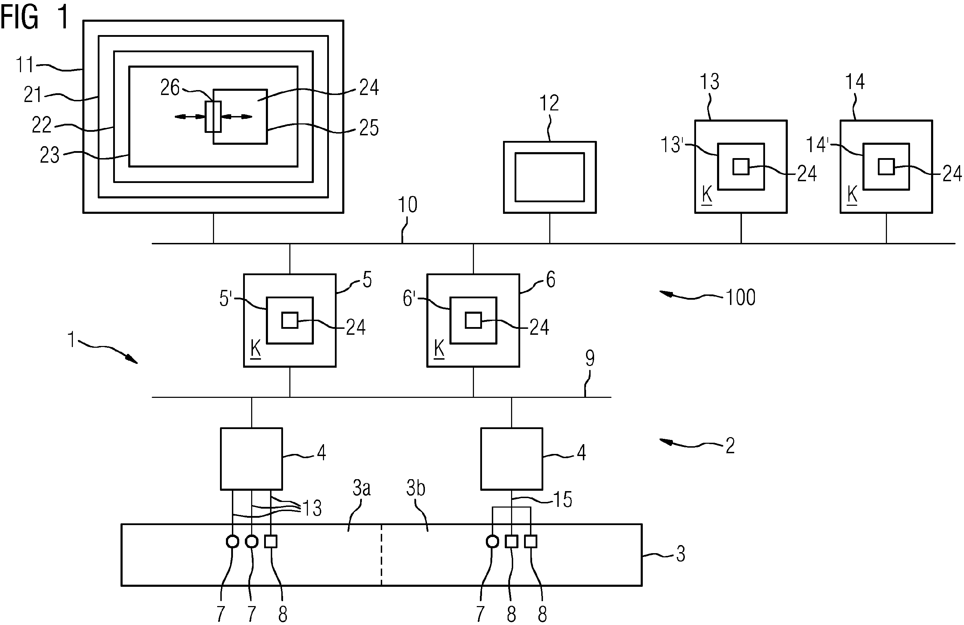

FIG 1 zeigt in vereinfachter Darstellung eine industrielle Anlage 1 mit einem industriellen Automatisierungssystem 2. Derartige Anlagen 1 kommen in verschiedensten Industriesektoren zum Einsatz, zum Beispiel in der Prozess-Industrie (z.B. Chemie, Pharma, Metall, Öl- und Gas, Papier), der diskreten Fertigungsindustrie und in der Energieerzeugung. Der eigentliche branchenspezifische Prozess 3, z.B. ein Produktions- oder Energieerzeugungsprozess, wird durch das Automatisierungssystem 2 gesteuert und/oder geregelt und überwacht. Das Automatisierungssystem 2 umfasst hierzu eine oder mehrere industrielle Steuerungen (hier die Steuerungen 4) und zwei oder mehr Automatisierungs-Server 5, 6, die häufig auch als "Anwendungs-Server" (Application-Server) oder "Operator-System-Server" bezeichnet werden.

Jede der Steuerungen 4 steuert dann den Betrieb jeweils eines Teilprozess 3a bzw. 3b des Prozesses 3 in Abhängigkeit von dessen Betriebszuständen. Der Prozess 3 umfasst hierzu von den Steuerungen 4 ansteuerbare Aktoren 7. Hierbei kann es sich um einzelne Aktoren (z.B. einen Motor, eine Pumpe, ein Ventil, ein Schalter), oder um Gruppen derartiger Aktoren oder um ganze Sektionen einer Anlage handeln. Weiterhin umfasst der Prozess Sensoren 8, die den Steuerungen 4 Istwerte von Prozessvariablen (z.B. Temperaturen, Drücke, Geschwindigkeiten) zur Verfügung stellen. Dem Teilprozess 3a ist dabei der Automatisierungs-Server 5 und dem Teilprozess 3b ist der Automatisierungs-Server 6 zugeordnet. Das Automatisierungssystem 2 ohne die Feldgeräte (d.h. ohne Aktoren 5 und Sensoren 6) wird häufig auch als "Prozessleitsystem" bezeichnet.

Ein Kommunikationsnetzwerk der Anlage 1 umfasst auf übergeordneter Ebene ein, vorzugsweise busförmig ausgebildetes, Anlagen-Netzwerk 10, über das die Automatisierungs-Server 5, 6 mit zwei Bedien- und Beobachtungs-Stationen 11, 12, häufig auch als "Operator Stations" bezeichnet, in Kommunikation steht, und ein, vorzugsweise busförmig ausgebildetes, Steuerungs-Netzwerk 9, über das die Steuerungen 4 miteinander und mit den Automatisierungs-Servern 5, 6 in Kommunikationsverbindung stehen. Die Verbindung der Steuerungen 4 mit den Aktoren 7 und Sensoren 8 kann über diskrete Signalleitungen 13 oder über einen Feldbus 15 erfolgen. Bei Prozessleitsystemen wird das Anlagen-Netzwerk 11 auch als "Terminal-Netzwerk" bzw. "Terminal-Bus" bezeichnet und das Steuerungsnetzwerk wird auch als "Anlagen-Netzwerk" bzw. "Anlagen-Bus" bezeichnet.

In den Automatisierungs-Servern 5, 6 sind ein oder mehrere anlagenspezifische Anwendungsprogramme gespeichert, die beim Betrieb der Anlage 1 zur Ausführung gebracht werden. Diese dienen beispielsweise dazu, in der Anlage 1 die Steuerungen 4 zu konfigurieren, Bediener-Aktivitäten an den Bedien- und Beobachtungs-Stationen 11, 12 zu erfassen und auszuführen (z.B. Sollwerte von Prozessvariablen einzustellen oder zu ändern) oder Meldungen für Anlagenpersonal zu erzeugen und auf den Bedien- und Beobachtungs-Stationen 11, 12 zur Anzeige zu bringen. Bei einem Prozessleitsystem sind die Bedien- und Beobachtungs-Stationen 11, 12 üblicherweise in einer Leitwarte der Anlage 1 angeordnet.

Das Automatisierungs-System 2 umfasst noch weitere Server, wie z.B. einen Wartungs-Server 13 und einen Engineering-Server 14, die ebenfalls an das Anlagen-Netzwerk 10 angeschlossen sind.

Die Server 5, 6, 13, 14 umfassen jeweils einen Web-Server 5', 6', 13' bzw. 14', der eine Web-Applikation 24 bereitstellt.

Auf einem Display 21 der Bedien- und Beobachtungs-Station 11 ist ein darauf ablaufender Web-Browser (kurz: Browser) 22 dargestellt, der über das Netzwerk 10 mit den Web-Servern 5', 6', 13' bzw. 14' kommunikativ verbindbar bzw. verbunden ist.

Im Browser.22 läuft eine erste Web-Anwendung 23 ab, die im Folgenden auch "umgebende Web-Anwendung" genannt werden soll und die zumindest teilweise vom Web-Server 5' gestützt ("gehostet") wird; analog dazu wird eine zweite Web-Anwendung 24, die im Folgenden auch "einzubettende Web-Anwendung" genannt werden soll, zumindest teilweise von einem der Web-Server 5', 6', 13' bzw. 14' gestützt ("gehostet"). Die einzubettende Web-Anwendung 24 ist zum Ablauf in einem separaten Ausführungs- und Anzeigebereich 25, der als "Inlineframe" oder "iframe" ausgestaltet ist, in der umgebenden Web-Anwendung 23 vorgesehen. Zwischen dem separaten Ausführungs- und Anzeigebereich 25 und der umgebenden Web-Anwendung 23 ist eine Integrations-Schnittstelle 26 zum Austausch von Nachrichten oder Meldungen angeordnet. Weiter sind Kommunikationskanäle zwischen den Web-Anwendungen 23, 24 und ihren jeweils zugeordneten Web-Servern etabliert.

Erfindungsgemäß wird die einzubettende Web-Anwendung 24 durch zumindest zwei Web-Server bereitgestellt, hier sogar durch sämtliche der Web-Server 5', 6', 13', 14'. Mit anderen Worten stellen sämtliche Web-Server 5', 6', 13', 14 die gleiche Web-Anwendung 24 bereit. Durch die Bereitstellung der einzubettende Web-Anwendung 24 durch die mehreren Web-Server 5', 6', 13', 14' kann bei einem Ausfall eines der Web-Server 5', 6', 13', 14' die Web-Anwendung 24 und die dadurch bereitgestellte Funktion weiterhin zur Verfügung gestellt werden. Gerade bei großen komplexen Systemen mit einer Vielzahl von Diensten bzw. Funktionen, Datenquellen und einer Vielzahl von Personen, die überwachend oder steuernd auf die Dienste bzw. Funktionen zugreifen, bietet sich hierdurch zusätzliche Flexibilität bei der Aufteilung der Dienste bzw. Funktionen, Datenquellen, Datenerfassungen und Datenspeicherungen auf unterschiedliche Teilsysteme, hier beispielsweise auf die zwei Teilprozesse 3a, 3b des Prozesses 3, und diesen jeweils zugeordnete Server, hier beispielsweise der dem Teilprozess 3a zugeordnete Server 5 und der dem Teilprozess 3b zugeordnete Server 6.

Dies kann genutzt werden, um Redundanz, Überwachbarkeit und Bedienbarkeit und somit Ausfallsicherheit zu erhöhen, Komplexität zu reduzieren, Kommunikationsverkehr zu reduzieren, und bessere Möglichkeiten für Zugriffsbeschränkungen für Personal zu erhalten.

Das System umfassend die Web-Server 5', 6', 13', 14', die Web-Anwendungen 23, 24 und den separaten Ausführungs- und Anzeigenbereich 25 ist hierbei mit 100 bezeichnet.

Von Vorteil ist dabei zumindest ein Kriterium K definiert, anhand dessen von dem Web-Server 5', der die umgebende Web-Anwendung 23 bereitstellt, automatisiert derjenige Web-Server 5', 6', 13', 14' bestimmt wird, dessen bereitgestellte Web-Anwendung 24 in die umgebende Web-Anwendung 23 eingebettet wird. Das Kriterium kann dabei beispielsweise auch implizit anhand in dem Web-Server 5' abgespeicherter fester Zuordnungen von Web-Anwendungen 24 zu den Web-Servern 5', 6', 13', 14' hinterlegt sein.

Vorzugsweise bezieht sich das Kriterium auf die Kommunikation in dem Anlagen-Netzwerk 10, insbesondere auf eine Reduzierung eines Datenverkehrs in dem Anlagen-Netzwerk 10, und hier insbesondere zwischen den Web-Servern 5', 6', 13', 14'. Dies ist vor allem dann wichtig, wenn Daten oder Visualisierungen des Prozesses 3 oder des Automatisierungssystems 2 nur in einem der Server 5, 6, 13, 14 originär verfügbar sind. Beispielsweise sind Daten zu Prozesswerten aus dem Teilprozess 3b originär nur für den Server 6 verfügbar. Wenn nun aber die Web-Applikation 24 des Web-Servers 5' in die umgebende Web-Anwendung 23 eingebettet wird, müssen diese Daten von dem Server 6 über das Anlagen-Netzwerk 10 an den Server 5 übertragen werden. Es entsteht somit ein Daten-Querverkehr zwischen den Servern 5, 6, der zu unerwünschten Belastungen des Anlagen-Netzwerks 10 führt.

Das Kriterium K kann sich aber auch auf Zugriffsbeschränkungen, Quality of Service, Verfügbarkeit der Web-Server 5', 6', 13', 14'., etc. beziehen. Es kann dabei auch eine Kombination von Kriterien zum Einsatz kommen.

Das Kriterium K ist (oder ggf. die Kriterien sind) in den Servern 5, 6, 13, 14 bzw. Web-Servern 5', 6', 13', 14' abgespeichert.

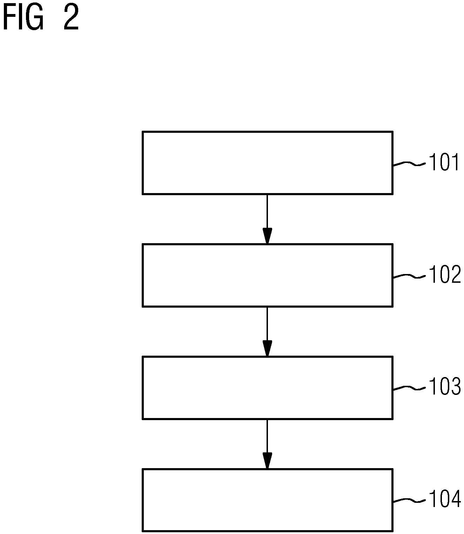

Zusammen mit FIG 2 soll nun ein vorteilhafter Verfahrensablauf erläutert werden:
Dabei wird beispielhaft davon ausgegangen, dass das Kriterium K die Reduzierung von Datenverkehr in dem Anlagen-Netzwerk 10 ist und dass die Web-Anwendung 24 Daten aus dem Teilprozess 3b benötigt.

Der Web-Server 5', der die umgebende Web-Anwendung 23 bereitstellt, ermittelt in einem ersten Schritt 101, welche Web-Server in dem Automatisierungssystem 2 die Web-Anwendung 24 bereitstellen. Hier würde der Web-Server 5', z.B. durch Abfragen bei allen Servern, die Web-Server 5', 6', 13', 14' ermitteln. Alternativ kann diese Information auch bereits in dem Web-Server 5' abgespeichert sein, z.B. im Rahmen der Projektierung des Automatisierungssystems 2.

In einem zweiten Schritt 102 ermittelt der Web-Server 5' anhand des hinterlegten Kriteriums K (hier Reduzierung von Datenverkehr) denjenigen der Web-Server 5', 6', 13', 14', dessen bereitgestellte einzubettende Web-Anwendung 24 in die umgebende Web-Anwendung 23 eingebettet wird. Im genannten Beispiel ist dies der Web-Server 6'. Wie bereits erwähnt kann das Kriterium dabei beispielsweise auch implizit anhand in dem Web-Server 5' abgespeicherter Zuordnungen von Web-Anwendungen 24 zu den Web-Servern 5', 6', 13', 14' hinterlegt sein (z.B. im Rahmen der Projektierung des Automatisierungssystems 2).

Der Web-Server 5' teilt dann in einem weiteren Schritt 103 diesen ermittelten Web-Server 6' der umgebenden Web-Anwendung 23 bei deren Ausführung mit, so dass diese dann die Web-Anwendung 24 des ermittelten Web-Servers 6' in die umgebende Web-Anwendung 23 einbettet.

Der Web-Server 5', der die umgebende Web-Anwendung 23 bereitstellt, teilt der umgebenden Web-Anwendung 23 bei deren Ausführung in einem Schritt 104 zusätzlich auch die anderen Web-Server 5', 13' 14' mit, die die einzubettende Web-Anwendung 24 bereitstellen. Bei einem Ausfall der Web-Anwendung 24 des Web-Servers 6' kann dann die umgebende Web-Anwendung 23 ohne größere Verzögerung auf einen anderen der Web-Server 5', 13', 14' umschalten, d.h. einen Kommunikationskanal zu diesem Web-Server aufbauen, und die Web-Anwendung 24 dieses Web-Servers einbetten.

Alternativ kann der Web-Server 5', der die umgebende Web-Anwendung 23 bereitstellt, auch nur das Kriterium K "Reduzierung des Datenverkehrs" bereitstellen. Dieses kann dann an anderer Stelle für die Bestimmung des Web-Servers der einzubettenden Web-Anwendung 24 genutzt werden. Beispielsweise können die umgebende Web-Anwendung 23 oder ein anderer Dienst dann selbst anhand des Kriteriums den Web-Server für die einzubindende Web-Anwendung 24 bestimmen.

## Patentansprüche

1. Verfahren zur Einbettung einer einzubettenden Web-Anwendung (24) in eine umgebende Web-Anwendung (23), wobei die einzubettende Web-Anwendung (24) zum Ablauf in einem separaten Ausführungs- und Anzeigenbereich (25) der umgebenden Web-Anwendung (24) vorgesehen ist, **dadurch gekennzeichnet, dass** die einzubettende Web-Anwendung (24) durch zumindest zwei Web-Server (5', 6') bereitgestellt wird.

2. Verfahren nach Anspruch 1, bei dem zumindest ein Kriterium (K) definiert ist, anhand dessen derjenige der zumindest zwei Web-Server (5', 6') bestimmt wird, dessen bereitgestellte einzubettende Web-Anwendung (24) in die umgebende Web-Anwendung (23) eingebettet wird.

3. Verfahren nach Anspruch 2, bei dem die einzubettende Web-Anwendung (24) und die zumindest zwei Web-Server (5', 6') über eine Kommunikationseinrichtung (10) kommunikativ miteinander verbunden sind und sich das Kriterium (K) auf die Kommunikation in der Kommunikationseinrichtung (10) bezieht.

4. Verfahren nach Anspruch 3, bei dem das Kriterium (K) eine Reduzierung eines Datenverkehrs in der Kommunikationseinrichtung (10), insbesondere zwischen den zumindest zwei Web-Servern (5', 6'), ist.

5. Verfahren nach einem der Ansprüche 2 bis 4, bei dem ein Web-Server (5'), der die umgebende Web-Anwendung (23) bereitstellt, anhand des Kriteriums (K) denjenigen der zumindest zwei Web-Server (5', 6') ermittelt, dessen bereitgestellte einzubettende Web-Anwendung (24) in die umgebende Web-Anwendung (23) eingebettet wird.

6. Verfahren nach Anspruch 5, bei dem der Web-Server (5'), der die umgebende Web-Anwendung (23) bereitstellt, den ermittelten Web-Server (6') der umgebenden Web-Anwendung (23) bei deren Ausführung mitteilt.

7. Verfahren nach Anspruch 6, bei dem der Web-Server (5'), der die umgebende Web-Anwendung (23) bereitstellt, der umgebenden Web-Anwendung (23) bei deren Ausführung zusätzlich auch die anderen Web-Server (5', 13', 14') mitteilt, die die einzubettende Web-Anwendung (24) bereitstellen.

8. Verfahren nach einem der vorhergehenden Ansprüche, bei dem durch die Web-Anwendungen (24) Funktionen in einem industriellen Automatisierungssystem (2) bereitgestellt werden

9. System (100) zur Einbettung einer einzubettenden Web-Anwendung (24) in eine umgebende Web-Anwendung (23), wobei die einzubettende Web-Anwendung (24) zum Ablauf in einem separaten Ausführungs- und Anzeigenbereich (25) der umgebenden Web-Anwendung (23) vorgesehen ist, **gekennzeichnet durch** zumindest zwei Web-Server (5', 6'), die die einzubettende Web-Anwendung (24) bereitstellen.

10. System (100) nach Anspruch 9, das ausgebildet ist, anhand zumindest eines Kriteriums (K) denjenigen der zumindest zwei Web-Server (5' 6') zu bestimmen, dessen bereitgestellte einzubettende Web-Anwendung (24) in die umgebende Web-Anwendung (23) einzubetten ist.

11. System (100) nach Anspruch 10, bei dem die einzubettende Web-Anwendung (24) und die zumindest zwei Web-Server (5' 6') über eine Kommunikationseinrichtung (10) kommunikativ miteinander verbunden sind und bei dem sich das Kriterium (K) auf die Kommunikation in der Kommunikationseinrichtung (K) bezieht, vorzugsweise auf eine Reduzierung eines Datenverkehrs in der Kommunikationseinrichtung (10), insbesondere zwischen den zumindest zwei Web-Servern (5' 6').

12. System (100) nach Anspruch 11, bei dem ein Web-Server (5'), der die umgebende Web-Anwendung (23) bereitstellt, ausgebildet ist, anhand des Kriteriums (K) denjenigen der zumindest zwei Web-Server (5', 6') zur ermitteln, dessen bereitgestellte einzubettende Web-Anwendung (24) in die umgebende Web-Anwendung (23) einzubetten ist.

13. System (100) nach Anspruch 12, bei dem der Web-Server (5'), der die umgebende Web-Anwendung (23) bereitstellt, ausgebildet ist, den ermittelten Web-Server (6') der umgebenden Web-Anwendung (23) bei deren Ausführung mitzuteilen.

14. System (100) nach Anspruch 14, bei dem der Web-Server (5'), der die umgebende Web-Anwendung (23) bereitstellt, ausgebildet ist, der umgebenden Web-Anwendung (23) bei deren Ausführung zusätzlich auch die anderen Web-Server (5', 13', 14') mitzuteilen, die die einzubettende Web-Anwendung (24) bereitstellen.

15. Industrielles Automatisierungssystem (2), insbesondere Prozessleitsystem, mit einem System nach einem der Ansprüche 9 bis 14.
